# EUROPEAN PATENT SPECIFICATION

(11) **EP 2 473 259 B1**
(45) Date of publication and mention of the grant of the patent: **26.02.2014**
(21) Application number: 10749645.7
(22) Date of filing: 02.09.2010
(51) Int. Cl.: B01D 65/00, B01D 63/08

(54) **FILTER MEMBRANE WITH SUPPORTING FRAME AND METHOD OF PRODUCTION**
FILTERMEMBRAN MIT STÜTZRAHMEN UND HERSTELLUNGSMETHODE
MEMBRANE DE FILTRATION AVEC CHÂSSIS DE SUPPORT ET PROCEDE DE SA FABRICATION

(30) Priority: 03.09.2009 EP 09169388; 07.09.2009 US 240245 P
(43) Date of publication of application: 11.07.2012
(73) Proprietor: Vlaamse Instelling voor Technologisch Onderzoek NV (VITO NV), 2400 Mol (BE)
(72) Inventor: VERHOEVEN, Walter, B-2640 Mortsel (BE); AGA, Guy, B-2640 Mortsel (BE)
(74) Representative: Pronovem
(86) International application number: PCT/EP2010/062836
(87) International publication number: WO 2011/026879

(56) References cited:
- EP-A1- 1 992 400
- WO-A1-2006/015461
- DE-C1- 10 230 342
- FR-A1- 2 647 512
- JP-A- 6 218 239
- US-A1- 2006 213 368

## Description

### FIELD OF THE INVENTION

The present invention relates to a filter element comprising an integrated permeate channel membrane and a frame system supporting the membrane and sealing said integrated permeate channel at the edge of the membrane. The invention also relates to a method of making such filter element and to a filter membrane module comprising a plurality of these filter elements.

### BACKGROUND OF THE INVENTION

There has been much interest in membrane bioreactors (MBRs) in the water-world in recent years. MBR is a combination of two basic processes - biological degradation and membrane separation - into a single process where suspended solids and microorganisms responsible for biodegradation are separated from the treated water by membrane filtration unit. To date research has concentrated on the applicability of MBRs for domestic, industrial and mixed domestic and industrial waste water treatment plants, concentrated flows from industrial production processes, the treatment of percolate water from waste disposal sites and the dewatering of sludge. The success of membrane bioreactors for wastewater application led to a study of the application of MBR concepts in the drinking water production process.

In wastewater MBR-applications biological treatment in a reactor is combined with physical treatment by membrane filtration. By using membrane filtration instead of a settling process, high sludge loads can be maintained in the reactor, which (theoretically) lead to high biological degradation rates with a low sludge production. Sludge concentrations of 15-20 g/l are mentioned in the MBR-literature. The high efficiency of the process would make it possible to process highly concentrated flows and to design systems with a small footprint. In practice, the footprint is reduced by the smaller area required for the membrane filtration due to a maximal maintainable sludge concentration of 8-12 g/l and dispensing with a settlement tank. In addition higher sludge production rates have been registered than in conventional settlement systems.

JP2001212436 discloses an immersion type membrane cartridge and production method therefore. In this application, an immersion type membrane cartridge is manufactured, wherein the membranes are welded to the inside margin of the filter cartridge.

JP2003135939 and JP2003144869 disclose a separation membrane manufactured by forming the porous resin layer on the surface of the porous base material composed of an organic fiber. A part of the resin is infiltrated into at least the surface layer part of the porous base material to form a composite layer with the porous base material at least in the surface layer part. The aim of these patents is to develop a membrane with high water permeability, in which clogging hardly occurs and the stripping of the porous resin layer from a porous base material is prevented.

JP 06-218239 discloses a fixing structure for film capable of preventing flowing out of an adhesive to the center side of a film device at the time of bonding the film on a supporting body and easy in detaching the film wherein a groove is provided at the peripheral part of the supporting body and the film is arranged to cover the groove and is fixed to the supporting body at the outside of the groove with the adhesive.

US 2006/0213368 discloses a hydrogen permeable membrane which has an excellent high-temperature amorphous stability and a long lifetime under high-temperature heating operation and which can be miniaturised for use in a high-performance hydrogen purifier. The membrane is made of a specified non-crystalline nickel-zirconium alloy and is placed between two nickel reinforced frames, each having a lateral outside dimension of 25 mm, a vertical outside dimension of 85 mm, a frame width of 5 mm and a frame thickness of 0.2 mm, and the membrane was ultrasonically welded to the reinforced frames and thereby fixed.

US 5,011,555 discloses a two step process for ultrasonically welding together first and second thermoplastic pieces and welding a membrane between these two pieces.

US 5,681,438 discloses a membrane module for continuous electrode ionisation process, in which non-porous membranes are bonded to spacer elements, which elements are in turn bonded to each other to create a membrane support zone as a result of contact with the surface of the membrane opposite the surface to which the membrane is bonded.

US 3,888,765 disclosses a precision micro sieve structure which consists of a thin flexible metal sieve surface mounted between two annular bodies axially aligned with each other and connected together.

DE 34 17 248 discloses a filter for separation of solids from liquids, suitable for removing dental amalgams from rinse liquids. The filter consists of sieve screens with circular collars that stack vertically in a plastic housing.

FR 2 647 512 discloses a process for the crimping of an elastically deformable surface under tension, such as a film or a tissue such as for filtration, wherein the elastically deformable surface is pinched between a fixed support and a removable frame. The removable frame comes into contact with a section of the fixed support and clamps the surface when the frame is moved into a locking position with the fixed support. During the locking movement, a projecting part of the frame places the surface under pension.

WO 2003/037489 discloses a plate filtration module, said module comprising a plurality of "filter membrane pockets" having at least one opening for draining the inner region of the same. Said pockets are vertically arranged in a rigid supporting element in a parallel manner, preferably at the same distance from each other, in such a way that the adjacent filter membrane pockets can intensively crossed by liquid. The filtration module is characterized in that the filter membrane pockets are essentially flat and flexible and are fixed to the supporting element on opposite sides, said supporting element comprising at least one evacuation line for evacuating the liquid which is sucked out via the filter membrane pockets having a flexible, liquid permeable core and a plurality of liquid permeable core elements.

WO 2006/056159 discloses a frameless membrane cartridge wherein membrane layers are coated on the outside faces of a reinforcing structure of at least two spaced apart drainage layers which are pressed together at the edges. The attachment of the membrane layer to the reinforcing structure is however poor, resulting in low backflush pressures that can be used.

Integrated permeate channel membranes, hereinafter also referred to as IPC membranes, in which the membrane is strongly linked to the reinforcing structure, are known from patent application WO 2006/015461. The IPC membranes comprise a permeate channel interposed between two membrane surfaces which form an integral and unitary structure. This is achieved by using a tri-dimentional spacer fabric, hereinafter also referred to as 3D spacer fabric, having two fabric surfaces which are spaced apart by monofilament thread at a predefined distance. The membrane layers are directly coated onto the fabric surfaces and partially impregnate said surface, such that also loops of the monofilament thread running through the fabric surface are embedded in the membrane layer. By so doing, a structure is obtained having two membrane surfaces which are spaced apart. By directly coating onto the 3D spacer fabric, the IPC membrane is more easy to be manufactured, resulting in a reduced manufacturing cost, and has a high bonding strength to allow backflush operations at relatively high pressures, resulting in an increased filtration efficiency.

Such IPC membranes may find their application in so-called membrane pockets or cartridges to be used in membrane bioreactors (MBR) for cleaning process or waste water streams. The membrane cartridges of the prior art WO 2006/015461 comprise a permeate channel interposed between two membrane surfaces wherein the permeate channel is sealed all around the edge of the cartridge and a drainage pipe is provided for extracting the permeate from the permeate channel. The manufacturing of such a membrane pocket or cartridge is cumbersome and includes a number of manual intervention.

WO 2008/141935 discloses a seamless membrane bag wherein the spacer fabric is impregnated with the membrane substance to form two membranes having an internal permeate channel between these innermost membrane surfaces and wherein the edges of the two membranes are joined together by membrane substance bridging the distance between the membranes. A tube is provided for extracting permeate from the internal permeate channel. By this method, an IPC membrane with an internal permeate channel is formed wherein a sealant at the perimeter of the membrane arranged to prevent direct fluid movement from or to the permeate channel without passing through a membrane is not required.

Presently available filter systems for waste water cleaning are comprised of a plurality of such membrane cartridges, typically mounted in a module, mounted in a box-shaped housing which is open upwardly and downwardly. Each of the membrane cartridges has an opening for discharge of the permeate and which are so arranged that the filter membrane cartridges are vertical, mutually parallel and spaced apart from neighboring membrane cartridges. The intervening spaces between the individual membrane cartridges form passages which are traversable by a fluid. Below this box with the membrane cartridges, a housing is arranged which includes a device providing air feed through which an upward flow is produced by means of which the liquid flows along the membrane cartridges. This upward air flow parallel to the membrane surfaces generates a cleaning stream to protect the filter membrane from clogging, i.e. deposit of waste on the filter membrane surface. During the filtration process and under the influence of the upward air flow, the intermembrane distance between the filter membranes, composed of a flexible spacer fabric coated with the membrane substance, changes whereby the distance between filter membranes at some places becomes smaller while at other places this distance becomes larger. When the intermembrane distance is too small, the intensity of the cleaning stream is not suficiently over the entire surface of the filter, resulting in clogging. The strength of the filter cartridge can be increased by using spacer-bars across the surface of the filter membrane, however, this impairs cleaning of the filter membrane of filtration-inhibiting deposits.

Another problem related to this upward air flow is that, due to these fluctuations in intermembrane distance, the filter membrane layers are damaged by scratches and tears, resulting in a shortened lifetime of the filter membranes.

It is therefore an object of the present invention to develop a filter element without the disadvantages outlined above.

### SUMMARY OF THE INVENTION

It is an object of the present invention to provide a filter element, which comprises an integrated permeate channel membrane, hereinafter also referred to as "IPC-membrane" or "membrane", as defined in claim 1, and a frame system, hereinafter also referred to as "frame", comprising a first and a second frame profile as defined in claim 1.

The filter element of the present invention has the advantage that the IPC membrane supported by the frame system is less sensitive to clogging and damaging during filtration and during upward air flow, resulting in an improved lifetime of the filter element.

The filter element of the present invention has also the advantage that high pressures can be used during the backwashing process and/or during the filtration process as a result of an improved sealing of integral permeate channel, hereinafter also referred to as "IPC" or "permeate channel", at the edge of the membrane IPC membrane by the attachment of the surrounding frame system attached to the IPC membrane. Due to this improved sealing higher pressures can be used in the filtration process resulting in a higher flux of the permeate and a faster filtration process. Due to this improved sealing higher pressures can also be used in the backwashing process resulting in a more efficient cleaning process of the IPC membrane and an improved lifetime of the filter element.

It is also an object of the present invention to provide a filter element which exhibits an additional internal contour channel, hereinafter also referred to as "additional permeate channel", in connection with the internal permeate channel. The additional internal contour channel is formed in a longitudinal channel of the frame system along the border of the membrane for collecting and transporting of extracted permeate from the integrated permeate channel to an outlet opening of the membrane. This additional permeate channel has the advantage of an improved flux of permeate during filtration process resulting in reduced pressures losses at the permeate side of the membrane which may result in reduced clogging. This additional permeate channel has also the advantage of an improved rate of backflow of permeate into the integrated permeate channel resulting in a faster backwashing process.

It is also an object of the present invention to provide a method for making a filter element as defined claim 11. The method has the advantage that the filter elements whereby the frame of the present invention as defined in claim 1 is used to support a membrane and to seal the IPC at the edge of the membrane, can be manufactured easily and at lower cost.

It is also an object of the present invention to provide a filter module comprising a plurality of the filter elements of the present invention. This filter module has the advantage that leaking filter elements or clogged filter elements in the module can easily be replaced by other filter elements.

Other specific embodiments of the invention are defined in the dependent claims.

### BRIEF DESCRIPTION OF THE DRAWINGS

Figure 1 shows a schematic representation of the first frame profile of the first type frame system.
Figure 2 shows a schematic representation of a cross-section of the first frame profile of the first type frame system, along at the axis a-a.
Figure 3 shows a schematic representation of the second frame profile of the first type frame system.
Figure 4 shows a schematic representation of a cross-section of the second frame profile of the first type frame system, along at the axis b-b.
Figure 5 shows a schematic representation of a cross-section of the first type frame system wherein the first frame profile is supperposed on the second frame profile.
Figures 6 and 7 show a schematic representation of a cross-section of the first type frame system wherein the first frame profile is supperposed on the second frame profile with in between the membrane.
Figure 8 shows a schematic representation of the first frame profile of the second type frame system.
Figure 9 shows a schematic representation of a cross-section of the first frame profile of the second type frame system, along at the axis a-a.
Figure 10 shows a schematic representation of the second frame profile of the second type frame system.
Figure 11 shows a schematic representation of a cross-section of the second frame profile of the second type frame system, along at the axis b-b.
Figures 12 to 14 show a schematic representation of a cross-suction of the second type frame system wherein the first frame profile is supperposed on the second frame profile.
Figures 15 and 16 shows a schematic representation of a cross-section of the second type frame system wherein the first frame profile is supperposed on the second frame profile with in between the membrane.
Figures 17 to 20 show a schematic representation of a cross-section of the first and second type frame systems wherein the first frame profile is supperposed on the second frame profile with in between the membrane and wherein the inner parts of the frame profiles are provided with a curved edge.
Figures 21 and 22 show a schematic elevated representation of a cross-section of the inner part with a curved edge.
Figures 23 to 26 show a schematic representation of a cross-section of the first and second type frame systems wherein the first frame profile is supperposed on the second frame profile with in between the membrane and wherein the inner parts of the frame profiles are provided with a curved edge and wherein the inner and outer parts of the frame profiles are provided with adhesive accepting grooves and adhesive groove.
Figures 27 to 30 show a schematic representation of a cross-section of the first and second type frame systems wherein the first frame profile is supperposed on the second frame profile with in between the membrane and wherein the inner parts of the frame profiles are provided with a spacer bar.
Figures 31 and 32 show a schematic representation of a cross-section of the first and second type frame systems wherein the first frame profile is supperposed on the second frame profile with in between the membrane and wherein the inner parts of the frame profiles of the present invention are attached onto the surface of the membrane and wherein the corner, formed by the inner part attached to the surface of the membrane, nearest to that area of the membrane which is used for filtering the liquid, are sealed.

### DETAILED DESCRIPTION

The invention provides a filter element comprising (i) an integrated permeate channel membrane (4) which has a flexible structure and comprises an upper and lower membrane layer and a substrate material for supporting said membrane layers, wherein said substrate is a 3D spacer fabric having an upper and a lower fabric surface, tied together and spaced apart by monofilament threads at a predefined distance, wherein each of said upper and lower fabric surface is provided with at least one membrane layer forming said upper and lower membrane layer and wherein a permeate channel is interposed between said upper and lower membrane layers and is connected with an outlet opening for discharge of the permeate of the integrated permeate channel, and (ii) a frame system supporting said membrane and sealing said integrated permeate channel at the edge of the membrane, said frame system comprising a first frame profile (1 or 5) and a second frame profile (2 or 6), each of them having form and dimensions capable of surrounding the membrane, wherein each of said first and second frame profile has inner parts (12, 22, or 52, 62) and outer parts (11, 21, or 54, 64), wherein said membrane (4) is interposed between said first frame profile (1 or 5) and said second frame profile (2 or 6) such that the inner parts are in contact with the surface of the upper and lower membrane layers at the periphery of the membrane, that the outer parts of the two frame profiles are in contact with each other and that the inner parts form a longitudinal channel (3 or 7) fitting the membrane, wherein the edge of the inner parts in contact with the surfaces of the membrane layers, nearest to the membrane area, has a curved form, and wherein an adhesive is used to attach the inner parts to the membrane layers and the outer parts to each other. The frame system of the filter element is especially suited for supporting an integrated permeate channel membrane and for sealing the edge of the membrane in one step.

The invention also provides a method for making such a filter element.

The invention further provides a filter module, said filter module comprising a plurality of said filter elements.

### The integrated permeate channel membrane

The integrated permeate channel membrane comprises a substrate material for supporting membrane layers, wherein said substrate is a three-dimensional spacer fabric, hereinafter also referred to as "3D spacer fabric". The 3D spacer fabric has an upper and a lower fabric surface, tied together and spaced apart by monofilament threads at a predefined distance as defined in WO 2006/015461 A1, EP 1 992 400 A1 and WO 2008/141935 A1.

In a preferred embodiment, the fabric surfaces and the monofilaments of the 3D spacer fabric are linked by loops in the monofilament threads as defined in WO 2006/015461 A1, EP 1 992 400 A1 and WO 2008/141935 A1. Preferably, the fabric surfaces are of a knitted, woven or non-woven type. The distance between the upper and lower fabric surface preferably lies between 0.5 and 10 mm. The 3D spacer fabric preferably comprises a material selected from the group consisting of polyester, nylon, polyamide, polyphenylene sulphide, polyethylene and polypropylene.

The IPC membrane further comprises a membrane layer applied on said upper and lower fabric surface and a permeate channel is interposed between said two membrane layers, wherein the membrane layers are linked at a multitude of points with said upper and lower fabric surfaces as defined in WO 2006/015461 A1, EP 1 992 400 A1 and WO 2008/141935 A1.

The membrane layers are applied at both sides of said upper and lower fabric surface, preferably by coating with a membrane dope in a coating apparatus. Thereafter, the dope is made to coagulate by removing the solvent. Coagulation can be performed by a phase inversion process, in which the solvent of the membrane dope is extracted from the dope by a non-solvent of the membrane polymer. The phase inversion can be performed in liquid (e.g. water) or in an ambient comprising a vapour of said non-solvent. Membrane formation may also be obtained by evaporation of the solvent (dry phase inversion). The phase inversion process is initiated from the outside.

The IPC membrane has a flexible structure such that the membrane can be folded and winded up on a roller. This means that the membrane has not the stiffness of a plate material.

The membranes usually have an asymmetric pore size distribution, in which the smallest pores are present at the feed side. Large particles hence can not penetrate the membrane layer and the membrane is easy to clean, e.g. by applying a backflush. Otherwise, particles would penetrate the membrane and obstruct the pores inside the membrane layer. The pore size distribution is tailored during the coagulation step and the inner and outer surfaces at both sides of the IPC membrane should not be exposed to the coagulating agent to the same extent. An asymetric pore size distribution can be realised by coagulation in the vapour phase. It is also possible to obtain this asymetric pore size distribution when the edges of the with membrane dope coated 3D spacer fabric are sealed prior to the coagulating step to prevent the coagulating agent penetrates into the permeate channel. In the art, this can be done in a separate step prior to coating the membrane or this can be done together with the coating step as disclosed in EP 1. 992 400 A1 and WO 2008/141935 A1.

The membrane layer preferably comprises a membrane polymer selected from the group consisting of polysulphone (PSU), polyvinyl chloride (PVC), polyacrylonitrile (PAN), polyester, polyethersulphone (PES), polyetherketone (PEK), polyetheretherketone (PEEK), polyvinylidene fluoride (PVDF), polyvinyl acetate (PVAc), polyvinyl alcohol (PVA), polyamide (PA), polyvinylpyrrolidone (PVP), crosslinked PVP, cellulosics such as cellulose acetate (CA) and cellulose triacetate (CTA), polycarbonate block polymers, a rubber selected from the group consisting of silicone rubber, Polymethylpentene, Chloroprene, SBR, NBR, Urethane, Hypalon®, Neoprene, Nitrile, Buna, Urethane, Epichlorohydrin, Viton®, EPDM, Butyl, Natural Rubber (Latex), Acrylrubber, Fluoroelastomers and, Perfluoroelastomers, and mixtures/blends thereof. Further suitable membrane polymers include chlorinated polyvinyl chloride (CPVC), copolymers of acrylonitrile e.g. with vinyl chloride or ethyl acrylate, polyethylene succinate (PESU), polyurethanes (PU), polyimides (PI), polyetherimide (PEI) and cellulosics such as hydroxypropyl cellulose (HPC), carboxymethyl cellulose (CMC), and cellulose tricarbanilate (CTC) mixtures/blends thereof and their grafted derivatives (sulphonated, acrylated, aminated etc). The membrane layer may also comprise hydrophilic polymers such as polyvinyl pyrrolidone (PVP), crosslinked polyvinylpyrrolidone (PVPP), polyvinyl alcohol, polyvinyl acetate, methyl cellulose and polyethylene oxide. The membrane layer may also comprise hydrophilic inorganic materials such as TiO₂, HfO₂, Al₂O₃, ZrO₂, Zr₃ (PO₄)4, Y₂O₃, SiO₂, perovskite oxide materials and SiC.

The membrane dope is a liquid polymeric solution comprising a membrane polymer and preferably has a viscosity between 1000 and 100,000 at a shear of 10 s-1, with a viscosity in the range of 10,000 to 50,000 s-1. the membrane dope comprises a membrane polymer, a hydrophilic filler material, an aprotic solvent such as N-methyl-pyrrolidone (NMP), N-ethyl-pyrrolidone (NEP), N,N-dimethylformamide (DMF), formamide, dimethylsulphoxide (DMSO), N,N-dimethylacetamide (DMAC), tetrahydrofuran (THF), acetone, triethylphosphate and mixtures thereof and a stabilizing agent, such as glycerol. Hydrophilizing and stabilizing agents such as glycerol can also be incorporated after the phase-inversion process is completed, but before drying. The hydrophilic filler influences the hydrophilicity of the membrane and its fouling behaviour. Often a variation in solvent mixture will give rise to different film morphologies and hence in membrane performance. Films formed by immersion of a polysulphone-NMP solution in water are porous. However, different membrane structures can be obtained upon immersion of a polysulphone-NMP-THF solution in water.

The IPC membrane further comprises a drainage pipe which is provided for extracting permeate from the permeate channel as defined in WO 2006/015461 A1, EP 1 992 400 A1 and WO 2008/141935 A1.

### Frame system

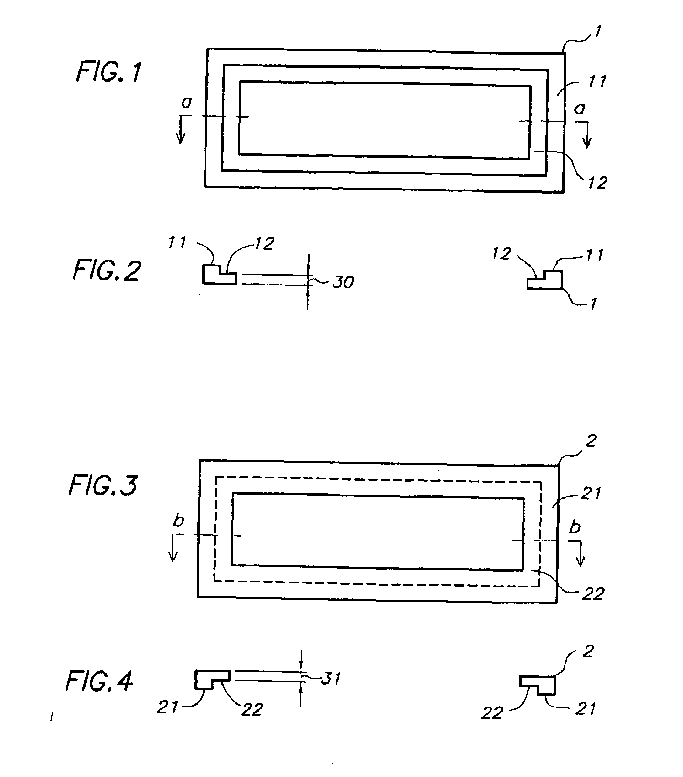

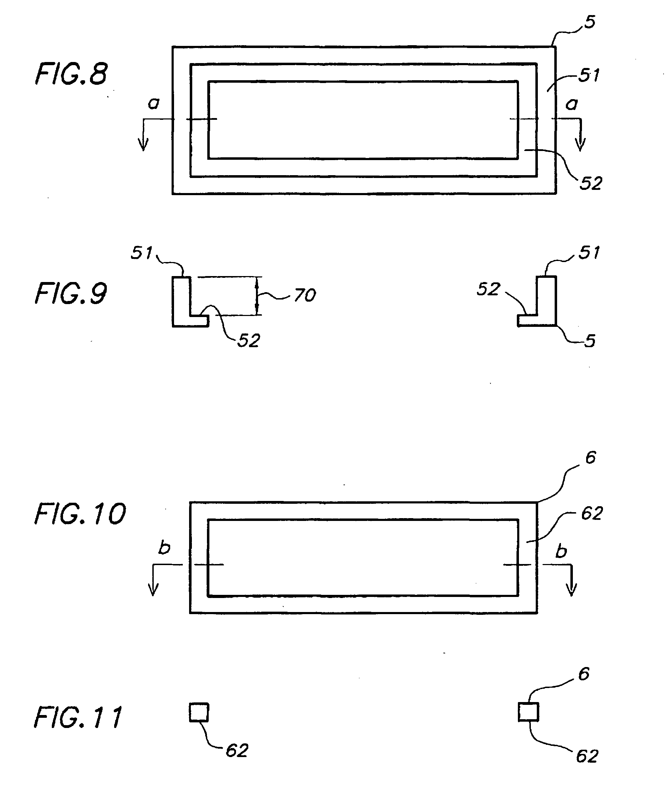

The filter element of the present invention further comprises a frame system, hereinafter also referred to as "frame", for supporting the IPC membrane and sealing the integrated permeate channel at the edge of the membrane. The frame system comprises a first frame profile (see number 1 in figures 1 to 7 or number 5 in figures 8 to 16) and a second frame profile (see number 2 in figures 1 to 7 or number 6 in figures 8 to 16), each of them having form and dimensions capable of surrounding the membrane. Two types of frame systems are defined in the present invention, namely a first type of frame system, as represented in figures 1 to 7, and a second type of frame system, as represented in figures 8 to 16.

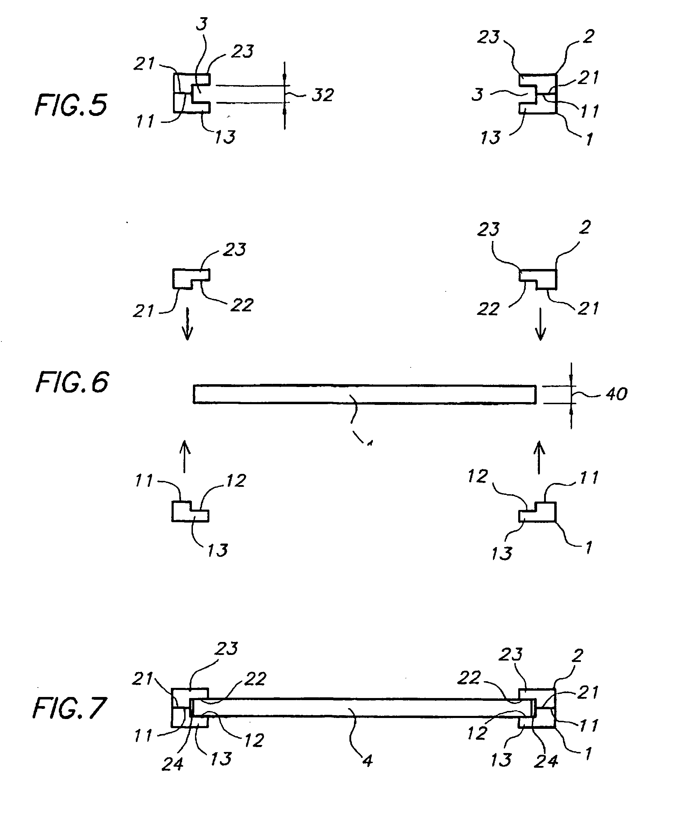

Each of the first and second frame profiles has inner parts (see number 12 and 22 in figures 1 to 7, or number 52 and 62 in figures 78 to 16) and outer parts (see number 11 and 21 in figures 1 to 7, or number 54 and 64 in figures 8 to 16). The IPC membrane (4) is interposed between the first frame profile (1 or 5) and the second frame profile (2 or 6) such that the inner parts are in contact with the surface of the upper and lower membrane layers at the periphery of the membrane, and such that the outer parts of the two frame profiles are in contact with each other, and such that the inner parts form a longitudinal channel (3 or 7) fitting the membrane. This longitudinal channel (3 or 7) has a first and a second channel flange (13, 23, or 53, 63), formed by the inner parts of the first and second frame profile, as shown in figure 5, 13 or 14.

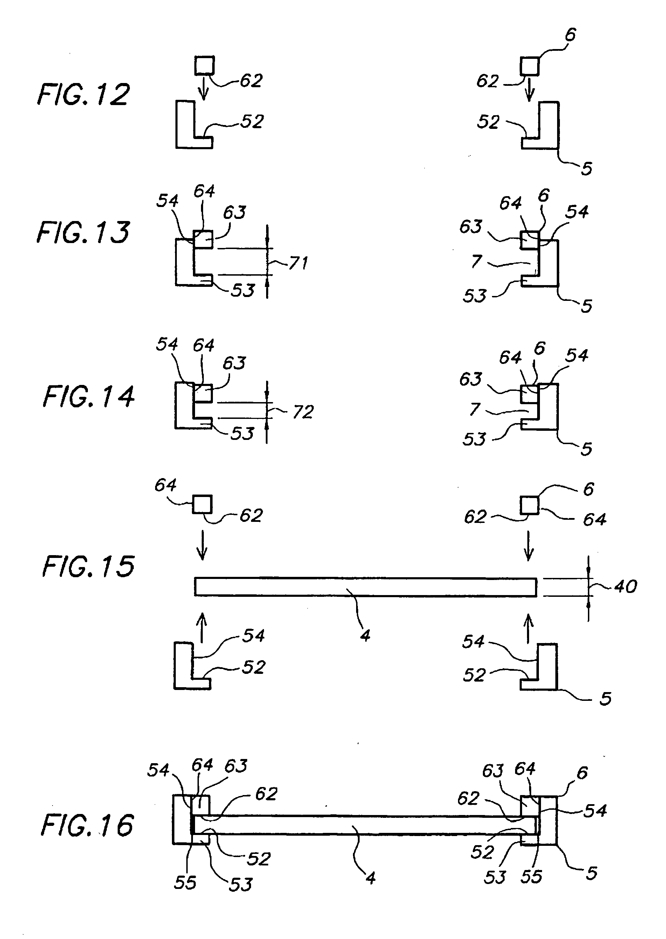

The width (32, or 71, 72) of said longitudinal channel (3 or 7) is the distance between the inner parts (12 and 22, or 52 and 62) when the profiles are superposed to each other in the way as defined above for interposing the membrane between the first and second frame profile.
For the first type of frame system, the width (32) has a fixed value, formed by the sum of the two thicknesses (30 and 31) of the first and second frame profile, matching the thickness of the membrane.
The width (71 or 72) for the second type of frame system has no fixed value, but can change within a broad range of values. There is no minimum width; only the maximum width depends on the thickness (70) of the outer part of the first frame profile of the membrane, reduced by the distance of surface overlap between the outer part (64) of the second frame profile and the outer part (54) of the first frame profile as shown in Figures 13 to 16. A minimum surface overlap, as exemplified in Figure 13, is necessary in order to be able to attach the outer part (64) of the second frame profile and the outer part (54) of the first frame profile in a manner that both parts are fixed sufficiently strong to each other such that the membrane remains tightly fixed into the longitudinal channel. This broad range of values for the longitudinal channel (71 or 72) of this second type frame system has the advantage that different types of membranes having different thicknesses can be supported by only one type of frame system. This may result in a much lower cost because only one type of the frame system needs to be manufactured which can be used for supporting a broad range of different types of membranes having different thicknesses.

The membrane (4) is fixed in the longitudinal channel by attaching the inner parts (12, 22, or 52, 62) to the surface of each side of the membrane layers and the outer parts (11, 21, or 54, 64) to each other by an adhesive. The adhesive may be selected from any type of synthetic or natural resin, hot-melt resin such as pressure sensitive hot-melt resins, and epoxy or polyurethane resins may be used. The adhesive is preferably a mixed adhesive comprising at least two different compounds which can react with each other to form the adhesion. A two component polyurethane resin or a two component epoxy resin is most preferred wherein a compound comprising at least two isocyanate groups or a compound comprising at least two epoxy groups is used as one reactive compound in the composition which may be added to react with a polyol compound or polyamine compound, i.e. a compound having at least two hydroxyl or amine groups. In an embodiment of the present invention, for the attachment of "wet" membranes, i.e. membranes which are not dried before applying the adhesive, water absorbing agents are preferably added to the adhesive. The water absorbing agents can be any type of natural or synthetic porous material. The porous material is preferably an inorganic silicate, a zeolite or a molecular sieve, more preferably a molecular sieve. The porous material has preferably a pore size ranging between 0.2 and 0.8 nm, more preferably between 0.3 and 0.5 nm. The porous material has preferably a particle diameter less than 0.5 mm, more preferably less than 100 µm, most preferably between 0.5 and 30 µm. For membranes in wet conditions, a water absorbing agent, such as a molecular sieve, is preferably added to the adhesive in an amount ranging between 1 and 50 % by weight, more preferably between 5 and 40 % by weight. The water absorbing agent is added to the adhesive, not only for the attachment of the inner parts of the frame to the membrane surfaces, but also for the attachment of the outer parts to each other.

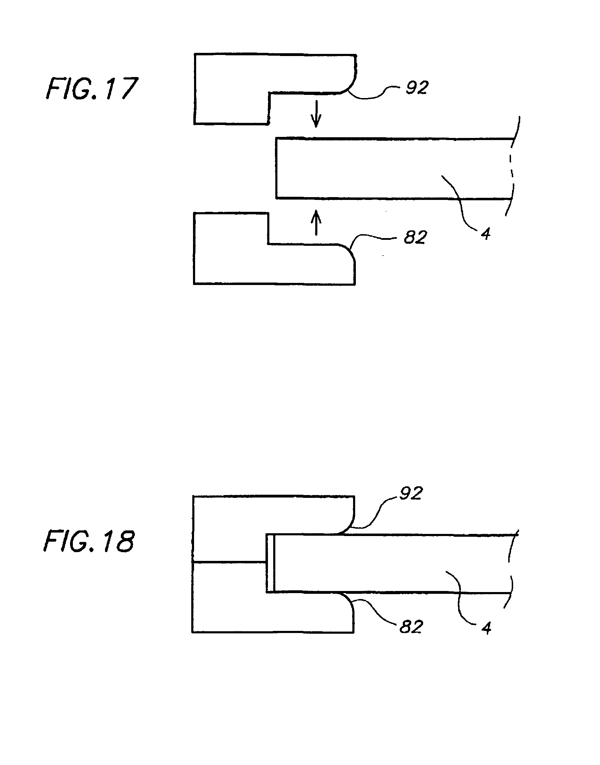

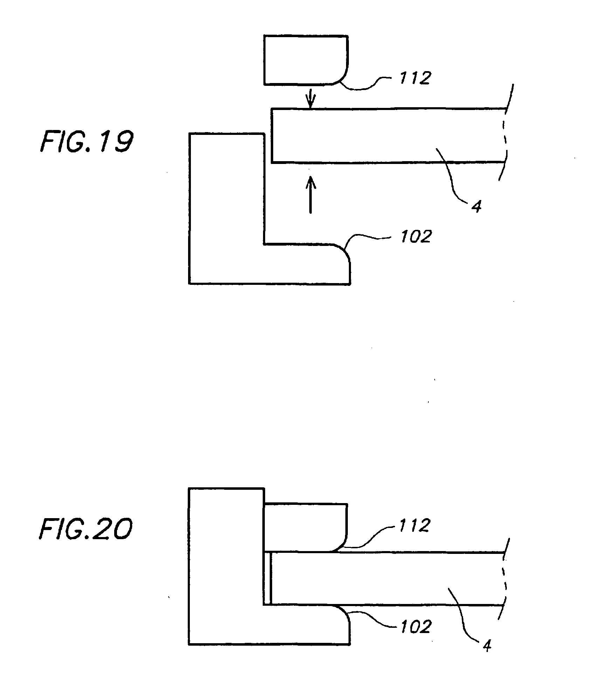

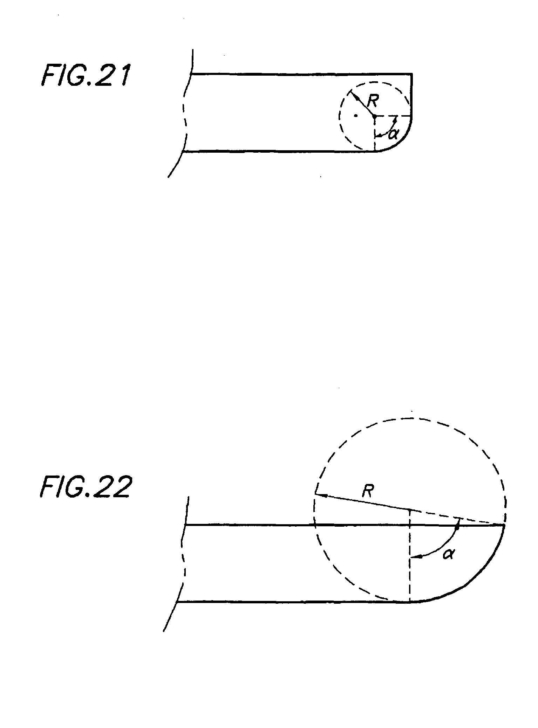

The edge of the inner parts of the first and second frame profiles, in contact with the surfaces of the membrane layers, nearest to the membrane area, has a curved form (see number 82 and 92 in figures 17 and 18 or number 102 and 112 in figures 19 and 20). This means that the edges of the channel flanges (13, 23, 53, 63) of the first and second frame profiles, where the membrane surface becomes in contact between the two inner parts of the frame profiles and nearest to the filtering area of the membrane, have a curved form. Note that the curved form of these edges is indicated in the figures 17 to 20 but in the figures 1 to 16 the curved form of that edge is not represented.
The rounding of the curve needs to be sufficiently large in order not to damage the membrane or to reduce the risk of damaging the membrane when it is supported in the frame system and/or when it is used in a filtration process, especially when cleaning gas is introduced from below into the immersed filtration module and a higher flow speed of the gas is generated by means of propellers or pumps in the area of the membrane surface in order to clean the filter membranes from deposits. (A description of this cleaning procedure is disclosed in US 2008/827 A1.) This damage can be a crack or a tear in the membrane layer, resulting in leakage of the membrane. The rounding of the edge can be represented by a part of a circle having a radius R and an angle α. This rounding is sufficiently large enough not to damage the membrane surface, when the radius R is large. When the radius R is small, the angle α needs to be larger than when the radius is larger, as shown in Figures 21 and 22. In a preferred embodiment, the angle α ranges between 3 and 120 degrees, more preferably between 5 and 90 degrees, and the radius R preferably ranges between 0.5 and 50 mm, more preferably between 1 and 30 mm, most preferably between 1.5 and 20 mm.

The form and dimensions of the first and second frame profiles when superposed to each other in the way as defined above, match the form and dimensions of the membrane such that the first and second frame profiles are capable of surrounding the membrane.

The shape of the frame profiles surrounding the membrane can be rectangular, square, diamond, triangular, circular or semicircular, preferably rectangular.

In a preferred embodiment, the two frame profiles of the first type frame system have the same configuration. This has the additional advantage that only one type of frame profile has to be manufactured and this frame profile can be used for both first and second frame profile, resulting in a much lower cost for making the frame profiles. In the method of supporting the membrane and sealing the IPC at the edge of the membrane, the first and second frame profiles reflect to each other and are superposed to each other thereby fixing the membrane by the channel flanges in the longitudinal channel.

In another embodiment of the present invention, the first and second frame profile of the first type frame system, each of them having an inner and an outer part as defined above, can have the same or a different configuration. Under "same configuration" is meant that essential features are the same, but that non-essential features may be different. Under "different configuration" is meant that essential features are different in the two frame profiles. Examples of such essential features are the thickness (30) of the first frame profile which can be larger than the thickness (31) of the second frame profile, or the surface of the inner parts (12) of the first frame profile which can be larger than that of the second frame profile, or the surface of the outer parts (11) of the first frame profile which can be larger than that of the second frame profile (21), or the presence of protuberances in the outer part of the first frame profile which can fit into holes present in the outer part of the second frame profile.

In an embodiment of the present invention, a method for making a filter element is provided, said method comprises the steps of:
- providing an IPC membrane (4) as defined above,
- providing a first frame profile (1 or 5) and a second frame profile (2 or 6) as defined above,
- mounting the membrane (4) on the first frame profile such that the membrane is in contact with the inner part (12 or 52) of the first frame profile,

- superpose the second frame profile on the first frame profile wherein the membrane is present such that the membrane is in contact with the inner part (22 or 62) of the second frame profile and that the outer parts (11, 21, or 54, 64) of the first and second frame profiles are in contact with each other,
- apply an adhesive between the inner part (12 or 52) of the first frame profile to one surface of the membrane, between the inner part (22 or 62) of the second frame profile to the other surface of the membrane and between the outer parts (11, 21, or 54, 64) of the first and second frame profiles, and
- attach the inner parts of the first and second frame profiles to either surface of the membrane and the outer parts of the first and second frame profiles to each other.

The frame system of the filter element is especially suited for supporting an IPC membrane and for sealing the edge of the membrane in one single step. When the edges of the membrane are sealed, an integrated permeate channel, interposed between two membrane surfaces, is formed for collecting permeate during the filtration process. Therefore, the edges of the membrane must be sealed very carefully at the perimeter of membrane to prevent direct fluid movement from or to the permeate channel without passing through a membrane layer. The frame system of the present invention has the advantage that it can be very conveniently applied on the membrane whereby the edge at the perimeter of the membrane is sealed by attaching it in the logitudinal channel, i.e. by attaching the inner parts to the membrane surface and by attaching the outer parts to each other. The presence of the frame system secures the seal of the edge and prevent any risk of leakages, especially when all the attachments of the frame profiles to each other and to the membrane are carried out by an adhesive, more preferably by a two component polyurethane or epoxy resin as defined above.
A perfect seal of the edges has the additional advantage that high pressures which can be be used during filtration process and during the backwashing process.

A perfect seal of the edges by the presence of the frame system has the additional advantage that an internal contour channel (24 or 55) can be formed in the internal side of the frame system when a space is provided between the IPC membrane, attached on the inner parts, and the outer parts of the frame profiles. This additional internal permeate channel is in connection with the internal permeate channel and in connection with the drainage opening or pipe. This drainage opening or pipe is not represented in the figures. This additional internal permeate channel provides an increasing flux of the permeate liquid, resulting in reduced pressures losses at the permeate side of the membrane which further may result in reduced clogging. The presence of this additional internal permeate channel has the additional advantage that, during the backwashing process, the rate of backflow of the permeate into the integrated permeate channel is increased, resulting in a faster and more efficient back-washable process.

The frame system of the present invention has the advantage of increasing the strength and the stiffness of the flexible filter element, wherein a 3D spacer fabric is used as support. Due to this increased strength, the intermembrane distance of the membranes is less influenced by the upward air flow, e.g. in a filter module. This means that the occurrence of small intermembrane distances during the filtration process is reduced resulting in less tendency of clogging and of damaging the membrane layers.

The filter element of the present invention has the advantage that it can be used as a modular filter system wherein the filter elements can be easily mounted in a filter module and, when a filter element does not work efficient due to leakage or to much clogging, it can be easily and quickly replaced by another filter element.

### Frame profile with adhesive accepting groove on inner and/or outer part

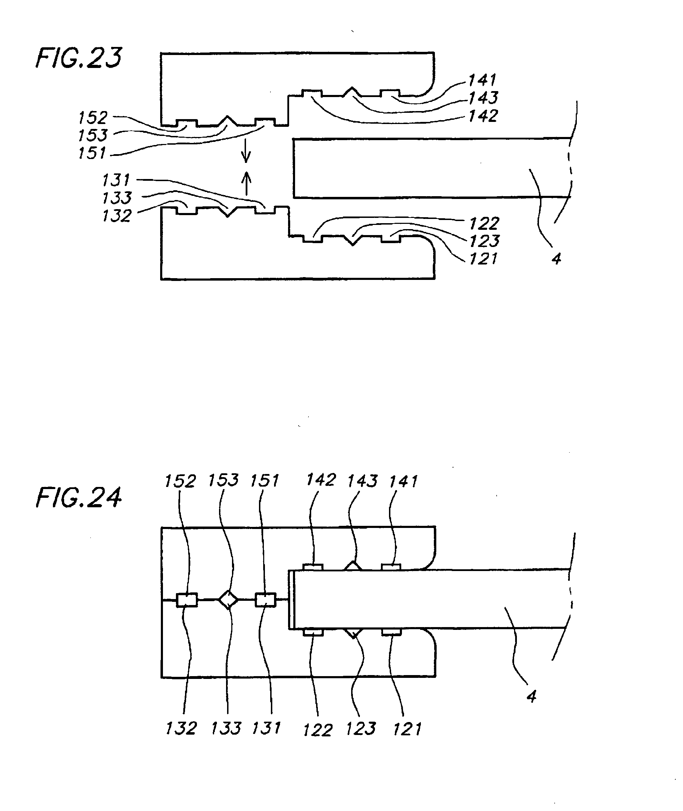

In another embodiment of the present invention, when inner parts of a frame profile of the first and second type of frame systems are attached to surfaces of a membrane by the use of an adhesive, these inner parts are provided with at least one adhesive accepting groove, i.e. a groove wherein excess of adhesive, applied on the inner part or on the membrane surface, can be gathered. In a preferred embodiment of the present invention, the adhesive accepting groove (121, 141, 161, 171) is present at the side to be attached on the membrane surface, beside the place where the adhesive is applied, nearest to the filtering area of the membrane. Note in the figures 23 to 26 on each part two adhesive accepting grooves are represented and also one adhesive groove.

The presence of this adhesive accepting groove has the advantage that excess of adhesive, which is spread out during the attachment, can be prevented in order not to soil the filtering membrane area, resulting in a reduced filtration capacity of the membrane filter, or not to soil the curved edge on the inner part, resulting in an increased risk of damaging the membrane layer at this edge. In order to be able to accept the excess of adhesive, the volume of the groove is preferably larger than the amount of adhesive which is in excess. In a preferred embodiment, the groove has a depth of preferably at least 0.3 mm, more preferably at least 0.5 mm, most preferably at least 0.8 mm, and a width of at least 0.5 mm, more preferably at least 1 mm, most preferably at least 2 mm.

In addition to the presence of this adhesive accepting groove as described above, another adhesive accepting groove (122, 142, 162 and 172) may be present on the inner parts of a frame profile at the same side as the first adhesive accepting groove. This second adhesive accepting groove is preferably present beside the other side of the place where the adhesive is applied as represented in figures 23 to 26. This second adhesive accepting groove is present on the perimeter of the inner part of the frame profile and may have a depth of preferably at least 0.3 mm, more preferably at least 0.5 mm, most preferably at least 0.8 mm, and a width of at least 0.5 mm, more preferably at least 1 mm, most preferably at least 2 mm. This other groove has the advantage that excess of adhesive, which is spread out during the attachment, can be prevented in order not to soil the inside of the frame system. When excess of adhesive present in the inside of the frame system can migrate in the membrane in the direction of the filtering area of the membrane, and this can disturb or even block the internal contour channel, formed at the inside of the frame system as defined above for an IPC membrane supported by a frame system of the present invention.

In another embodiment of the present invention, when outer parts of the frame profiles are attached to each other by the use of an adhesive, at least one of these outer parts, but preferably both outer parts of the two frame profiles, is (are) provided with at least one adhesive accepting groove, i.e. a groove wherein excess of adhesive, applied on the outer part, can be gathered.

For the first type of frame system, an adhesive accepting groove (131, 151) is present on the outer part at the side to be attached to the other outer part, beside the place where the adhesive is applied, nearest to the inner side of the frame system (Figures 23 and 24). This adhesive accepting groove is present on the perimeter of the frame profile and may have the same depth and width as defined above. This groove has the advantage that excess of adhesive, which is spread out during the attachment, can be prevented in order not to soil the inside of the frame system. When excess of adhesive present in the inside of the frame system can migrate in the membrane in the direction of the filtering area of the membrane, and this can also reduce the filtering capacity of the membrane filter. In addition to the presence of this adhesive accepting groove as described above, a second adhesive accepting groove (132, 152) can be present on at least one of these outer parts, but preferably on both outer parts of the two frame profiles, beside the other side of the place where the adhesive is applied (Figures 23 and 24). This second adhesive accepting groove can be present on the perimeter of the frame profile and may have the same depth and width as defined above. This other groove has the advantage that excess of adhesive, which is spread out during the attachment, can be prevented in order not to soil the outside of the frame system.

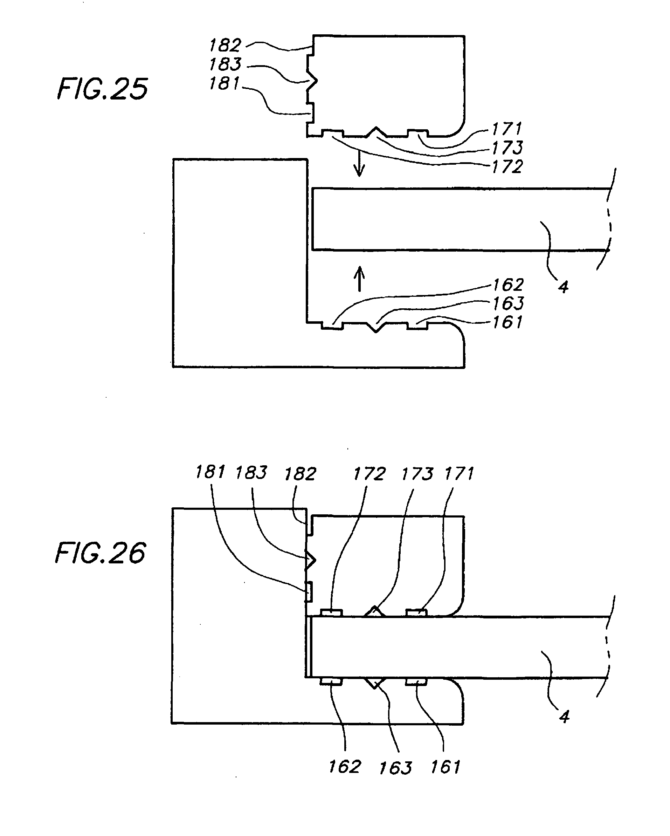

For the second type of frame system, when the outer part (54) of the first frame profile is attached to the outer part (64) of the second frame profile by the use of an adhesive, one or both of the outer parts (54, 64) is or are provided with at least one adhesive accepting groove, i.e. a groove wherein excess of adhesive, applied on the inner part, can be gathered, preferably an adhesive groove is present on the outer part (64) of the second frame profile as represented in figure 25 and 26. In a preferred embodiment, the adhesive accepting groove (181) is present on the outer part of the second frame profile, beside the place where the adhesive is applied, nearest to the inner side of the frame system (Figures 25 and 26). This adhesive accepting groove is present on the perimeter of the second frame profile and may have the same depth and width as defined above. This groove has the advantage that excess of adhesive, which is spread out during the attachment, can be prevented in order not to soil the inside of the frame system. When excess of adhesive present in the inside of the frame system can migrate in the membrane in the direction of the filtering area of the membrane, and this can disturb or even block the internal contour channel, formed at the inside of the frame system as defined above for an IPC membrane supported by a frame system of the present invention. In addition to the presence of this adhesive accepting groove as described above, another adhesive accepting groove (182) can be present on the same outer part or on the other outer part or on both outer parts. In a preferred embodiment, the second adhesive accepting groove is present beside the other side of the place where the adhesive is applied on the outer part of the second frame profile as represented by number 182 in figures 25 and 26. This other adhesive accepting groove is present on the perimeter of the frame profile and may have the same depth and width as defined above. This other groove has the advantage that excess of adhesive, which is spread out during the attachment, can be prevented in order not to soil the outside of the frame system.

### Frame profile with adhesive groove on inner and/or outer part

In another preferred embodiment of the present invention, when inner parts of a frame profile are attached to surfaces of a membrane by an adhesive or outer parts are attached to each other by an adhesive, these parts are provided with at least one adhesive groove (123, 143, 133, 153, 163, 183) at the side to be attached on the membrane surface or on the other outer part (Figures 23 and 24). When the outer parts are attached to each other by an adhesive, at least one of these outer parts is provided with an adhesive groove. For the first type frame system, an adhesive groove (133, 153) is preferably present on both outer parts to be attached to each other For the second type frame system, an adhesive groove ((183) is preferably present on the outer part of the second frame profile.

The adhesive grooves on each of the inner or outer parts are preferably present in the middle or about in the middle of the surface of the attaching parts, and on the perimeter of the frame profiles. The adhesive can be applied into an adhesive groove which may have a depth of preferably between 0.3 mm and 2 mm, more preferably between 0.5 mm and 1.5 mm, most preferably between 0.8 mm and 1.3 mm, and a width of preferably between 1 mm and 5 mm, more preferably between 2 mm and 4 mm, most preferably between 3 mm and 3.5 mm.

The presence of the adhesive groove has the advantage that the necessary amount of adhesive for the attachment, can be dosed more precisely in order to prevent that not enough adhesive is present between the two surfaces to obtain a uniform and complete attachment or that the adhesive is applied in a too high amount that the excess of adhesive is too large such that too much adhesive is spread out during the attachment.

In a more preferred embodiment, the adhesive groove is combined with the presence of at least one adhesive accepting groove beside this adhesive groove as defined above for each situation, most preferably with the presence of two adhesive accepting grooves beside each side of this adhesive groove as defined above for each situation. This combination has the advantage that enough adhesive can be dosed for the attachment and that soiling of the filtering area of the membrane and/or soiling the inner side of the frame system and/or soiling of the outer side of the frame system can be prevented. As a result, the latitude of the dosage of the adhesive can be improved and a faster manufacturing process for supporting a membrane by a frame system can be obtained.

### Frame profile with a spacer bar on inner part

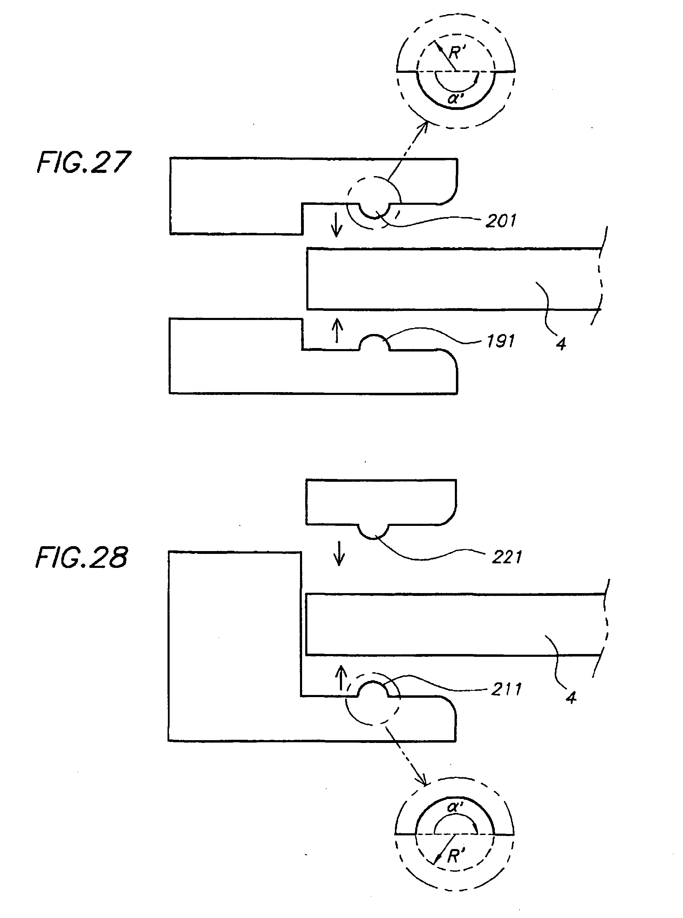

In another embodiment of the present invention, the inner parts of a frame profile of the first and second type of frame systems may be provided with at least one spacer bar.
The spacer bar (191, 201, 211, 221, 231, 241, 251, 261) (Figures 27 to 30) is present at the side to be attached on the membrane surface. The spacer bar (191, 201, 211, 221) may be present in the middle or about in the middle of the inner part, preferably two, three or more spacer bars are present. The spacer bar(s) is (are) present on the perimeter of frame profile. The spacer bar(s) can be an integral part of the inner part of the frame profile or a separate material such as a joint ring or a packing ring or a sealing ring, preferably in a rubber or rubber like material, which can be mounted on the inner part of the frame profile.
The presence of the spacer bar has the advantage that the membrane can be fixed in the frame system by pressing the inner parts of the first and second frame profile against each side of the membrane surface, wherein the membrane is tightened between the spacer bars of first and second inner parts and closed at the perimeter of the membrane. This position can be fixed by attaching the outer parts to each other. The use of a spacer bar has the additional advantage that the seal of the membrane at the perimeter is improved.

In a preferred embodiment of the present invention, the side of spacer bar which becomes in contact with the membrane surface when the first and second frame profiles are superposed to each other to support the membrane, has a curved configuration whereof the rounding can be defined by a part of a circle having a radius R' and an angle α'. In a preferred embodiment, the angle α' ranges between 15 and 180 degrees and the radius R' ranges between 1 and 30 mm, more preferably between 2 and 20 mm, most preferably between 3 and 10 mm. The use of a spacer bar with this rounding has the additional advantage that the risk of damaging the membrane layer during filtration process and/or backwashing process is reduced.

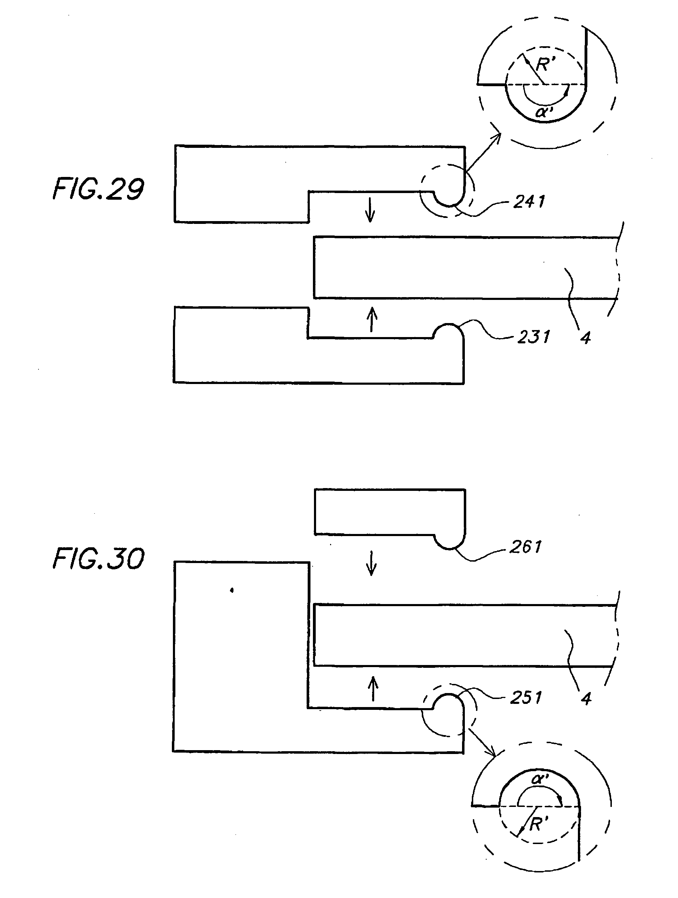

In another preferred embodiment, the spacer bar (231, 241, 251, 261) (Figures 29 and 30) is present at the edge of the inner part, nearest to the filtering area of the membrane. This configuration has the additional advantage that the curved edge of the inner part of the frame profile as defined above is replaced by this spacer bar having a curved configuration, whereby the risk of damaging the filter membrane tightened between these spacer bars by supporting in the frame system of the present invention is reduced. The rounding of this curved configuration can be defined by a part of a circle having a radius R' and an angle α' as defined above.

### Filter element with sealed inner part on membrane

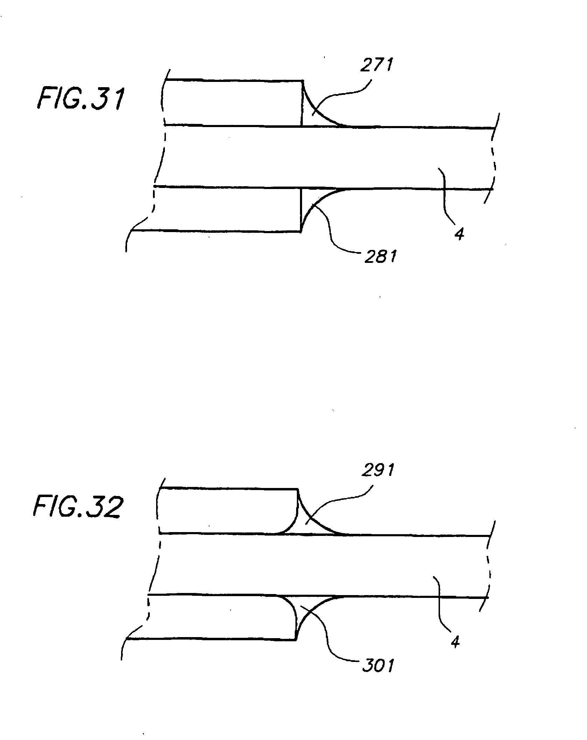

In the method of making a filter element, the inner parts of the frame profiles of the present invention are attached onto the surface of the membrane by an adhesive as defined above. The inner parts of the frame profiles may be provided with a curved edge such as defined above, and/or with a spacer bar such as defined above, and/or with an adhesive accepting groove such as defined above, and/or with an adhesive groove such as defined above. In the method of making a filter element, the frame systems of the present invention exhibit a seal of the membrane at the edge over the entire contour of the membrane which is of especially interest for IPC membranes as described above. This seal can be further secured by an additional sealing step wherein an adhesive compound is applied at the corner, formed by the inner part attached to the surface of the membrane, nearest to that area of the membrane which is used for filtering the liquid, and filtering area of the membrane. These corners (271, 281, 291, 301) as shown in Figures 31 and 32 for an inner part with and without a curved edge, but not shown for an inner part with a spacer bar, can be sealed by filling up with an adhesive compound whereby at least part of the side wall of the inner part, nearest to that area of the membrane which is used for filtering the liquid, and a small area of the membrane surface, nearest to the inner part, are protected by the adhesive compound. This small area of the membrane surface is preferably defined by an area having a width of 20 mm, more preferably a width of 10 mm, most preferably a width of 5 mm, and a length corresponding with the entire perimeter of the membrane.

In a preferred embodiment of the present invention, this adhesive compound has an elastic property such that the area of the membrane surface, protected by this elastic compound, is still capable to being moved during the filtration process. This adhesive compound may be polymeric compounds or resins such as each type of natural or synthetic rubber; polyolefines based on polyethylene, polypropylene, polybutene; polydienes based on butadiene, isoprene or silicones; elastomeric or thermoplastic polymers; etc. The presence of this additional seal has the advantage that the risk of damaging the membrane, such as a leakage of the membrane or even a crack or a tear in the membrane layer, is reduced, especially when cleaning gas is introduced from below into the immersed filtration module and a higher flow speed of the gas is generated by means of propellers or pumps in the area of the membrane surface in order to clean the filter membranes from deposits.

### Materials and composition of frame profiles

The frame profiles of the frame system of the present invention can be made of any type of synthetic material, especially suited materials are a copolymer of acrylonitrile, butadiene and styrene (ABS), copolymer of styrene, a polyamide such as a nylon, a fluor-containing polymer or copolymer such as Teflon, a polyester, a polycarbonate, a polyurethane, a phenolic resin, a polyvinylchloride, a copolymer of vinylchloride, an acrylate or methacrylate polymer or copolymer; highly preferred is an ABS copolymer. Other suitable materials may be selected from a metal such as iron, aluminium or copper, or metal blend comprising iron, aluminium, copper, nickel, chrome or zinc, or an alloy such as steel, inox or brass. Other suitable materials may also be selected from a composite material of a synthetic material reinforced by a metal or by a carbon fiber.

The frame system of the present invention has the advantage that the frame profiles and the attachments are stable and resist against the typical cleaning liquids used for cleaning/regenerating the filter membrane such as KClO, NaClO (e.g. Javel), citric acid, oxalic acid, etc., and also against these liquids used under high pressure.

The frame system of the present invention has the advantage that it can be applied before or after the coagulation step, and before drying the membrane, i.e. on a wet membrane, or after drying, i.e. on a dry membrane.

The frame system of the present invention has the advantage that a high backflush pressure can be applied on the filter membrane supported by this frame system.

The frame system of the present invention has the advantage that the frame itself can be reused for supporting another filter membrane.

In an embodiment of the present invention, a filter module is provided which comprises a plurality of filter elements of the present invention.

The frame system of the present invention has the advantage that the filter elements can be easily mounted in a filter module, and each filter element in this filter module can be easily removed and/or replaced by another filter element.

The filter elements of the present invention can be used for microfiltration, ultrafiltration, nanofiltration, reverse osmosis, membrane distillation, pervaporation, gas separation, immobilizing biological active species, such as enzyme membrane reactors or biofilm reactors, in membrane contractors, supported liquid membranes, perstraction, water degassing, aeration, humidification (vapour permeation), controlled release, in air conditioning, gas/air cleaning, etc.

## Claims

1. A filter element comprising
(i) an integrated permeate channel membrane (4) which has a flexible structure and comprises an upper and lower membrane layer and a substrate material for supporting said membrane layers, wherein said substrate is a 3D spacer fabric having an upper and a lower fabric surface, tied together and spaced apart by monofilament threads at a predefined distance, wherein each of said upper and lower fabric surface is provided with at least one membrane layer forming said upper and lower membrane layer and wherein a permeate channel is interposed between said upper and lower membrane layers and is connected with an outlet opening for discharge of the permeate of the integrated permeate channel, and
(ii) a frame system supporting said membrane and sealing said integrated permeate channel at the edge of the membrane, **characterised in that** said frame system comprises a first frame profile (1 or 5) and a second frame profile (2 or 6), each of them having form and dimensions capable of surrounding the membrane,
- wherein each of said first and second frame profile has inner parts (12, 22, or 52, 62) and outer parts (11, 21, or 54, 64),
- wherein said membrane (4) is interposed between said first frame profile (1 or 5) and said second frame profile (2 or 6) such that the inner parts are in contact with the surface of the upper and lower membrane layers at the periphery of the membrane, that the outer parts of the two frame profiles are in contact with each other and that the inner parts form a longitudinal channel (3 or 7) fitting the membrane,
- wherein the edge of the inner parts in contact with the surfaces of the membrane layers, nearest to a filtering area of the membrane, being that area of the membrane which is used for filtering liquid, has a curved form, and
- wherein an adhesive is used to attach the inner parts to the membrane layers and the outer parts to each other.

2. A filter element according to claim 1, wherein said inner parts (12, 22, or 52, 62) of said first and second frame profiles are provided with an adhesive accepting groove capable for accepting excess of said adhesive used for attaching the inner parts to the membrane layers.

3. A filter element according to claim 2, wherein said adhesive accepting groove is present beside the place where the adhesive is applied for attaching the inner parts to the membrane layers, nearest to the filtering area of the membrane.

4. A filter element according to claim 1, wherein said inner parts (12, 22, or 52, 62) of said first and second frame profiles are provided with at least two adhesive accepting grooves on either side of the place where the adhesive is applied for attaching the inner parts to the membrane layers, said grooves being capable of accepting excess of adhesive.

5. A filter element according to any of the preceding claims 1 to 4, wherein said inner parts (12, 22, or 52, 62) of said first and second frame profiles are provided with at least one adhesive groove for applying adhesive for attaching the inner parts to the membrane layers.

6. A filter element according to claim 1, wherein at least one of said outer parts (11, 21, or 54, 64) of said first or second frame profile is provided with an adhesive accepting groove capable of accepting excess of said adhesive used for attaching the outer parts to each other.

7. A filter element according to claim 1, wherein each of said outer parts (11, 21, or 54, 64) of said first and second frame profiles are provided with an adhesive accepting groove capable of accepting excess of said adhesive used for attaching the outer parts to each other.

8. A filter element according to claim 6 or 7, wherein said adhesive accepting groove is present beside the place where the adhesive is applied for attaching the outer parts to each other, nearest to the inner parts.

9. A filter element according to claim 1, wherein at least one of said outer parts (11, 21, or 54, 64) of said first or second frame profile is provided with at least two adhesive accepting grooves on either side of the place where the adhesive is applied for attaching the outer parts to each other, said grooves being capable of accepting excess of adhesive.

10. A filter element according to claim 1, wherein each of said outer parts (11, 21, or 54, 64) of said first and second frame profiles are provided with at least two adhesive accepting grooves on either side of the place where the adhesive is applied for attaching the outer parts to each other, said grooves being capable of accepting excess of adhesive.

11. A filter element according to any of the preceding claims 1 to 10, wherein said outer parts (11, 21, or 54, 64) of said first and second frame profiles are provided with at least one adhesive groove for applying adhesive for attaching the outer parts to each other.

12. A filter element according to any of the preceding claims 1 to 11, wherein an additional permeate contour channel is formed in said longitudinal channel along the border of the membrane for collecting and transporting of extracted permeate from the integrated permeate channel to said outlet opening of the membrane.

13. A method for making a filter element comprising the steps of:
- providing an integrated permeate channel membrane (4) as defined in claim 1,
- providing a first frame profile (1 or 5) and a second frame profile (2 or 6) as defined in any of the claims 1 to 11,
- mounting the membrane (4) on the first frame profile such that the membrane is in contact with the inner part (12 or 52) of the first frame profile,
- superpose the second frame profile on the first frame profile wherein the membrane is present such that the membrane is in contact with the inner part (22 or 62) of the second frame profile and that the outer parts (11, 21, or 54, 64) of the first and second frame profiles are in contact with each other,
- apply an adhesive between the inner part (12 or 52) of the first frame profile to one surface of the membrane, between the inner part (22 or 62) of the second frame profile to the other surface of the membrane and between the outer parts (11, 21, or 54, 64) of the first and second frame profiles, and
- attach the inner parts of the first and second frame profiles to either surface of the membrane and the outer parts of the first and second frame profiles to each other.

14. A filter module comprising a plurality of filter elements as defined in any of the preceding claims 1 to 12.

15. method for improving the pressure applied during filtration process and/or backwashing process and for reducing the risk of leakage of the membrane and/or of damaging of the membrane surfaces by supporting an integrated permeate channel membrane as defined in claim 1 and sealing the integrated permeate channel at the edge of said membrane by a frame system as defined claim 1.

## Patentansprüche

1. Ein Filterelement, umfassend:
(i) Membran mit integriertem permeatkanal (4), die eine flexible Struktur hat und eine obere und untere Membranschicht umfasst und ein Substratmaterial zum Stützen der besagten Membranschichten, wobei das besagte Substrat ein 3D-Abstandshaltegewebe ist, das eine obere und eine untere Gewebefläche hat, durch Monofilfäden miteinander verbunden und in einem vorgegebenen Abstand gehalten, wobei jede der besagten oberen und unteren Gewebeflächen mit mindestens einer Membranschicht versehen ist, die die obere und untere Membranschicht bildet, und wobei ein Permeatkanal zwischen den oberen und unteren Membranschichten liegt und mit einer Auslassöffnung zum Entleeren des Permeats des integrierten Permeatkanals verbunden ist, und
(ii) ein Rahmensystem, das die besagte Membran stützt und den integrierten Permeatkanal am Rand der Membran abdichtet, **dadurch gekennzeichnet, dass** das besagte Rahmensystem ein erstes Rahmenprofil (1 oder 5) und ein zweites Rahmenprofil (2 oder 6) umfasst, die jeweils eine Form und Abmessungen haben, mit denen sie die Membran umgeben können,
- wobei jedes der besagten ersten und zweiten Rahmenprofile innere Teile (12, 22 oder 52, 62) und äußere Teile (11, 21 oder 54, 64) hat,
- wobei die besagte Membran (4) zwischen dem besagten ersten Rahmenprofil (1 oder 5) und dem besagten zweiten Rahmenprofil (2 oder 6) derart liegt, dass die inneren Teile in Kontakt mit der Oberfläche der oberen und unteren Membranschichten am Rand der Membran sind, dass die äußeren Teile der zwei Rahmenprofile in Kontakt miteinander sind und dass die inneren Teile einen Längskanal (3 oder 7) bilden, der der Membran angepasst ist,
- wobei die Kante der inneren Teile in Kontakt mit den Flächen der Membranschichten, unmittelbar neben einer Filterfläche der Membran, die die Fläche der Membran ist, die zum Filtern von Flüssigkeit verwendet wird, eine gekrümmte Form hat, und
- wobei ein Klebstoff zum Befestigen der inneren Teile an den Membranschichten und der äußeren Teile miteinander verwendet wird.

2. Ein Filterelement nach Anspruch 1, wobei die inneren Teile (12, 22 oder 52, 62) der besagten ersten und zweiten Rahmenprofile mit einer Klebstoff aufnehmenden Nut versehen sind, die überschüssigen besagten Klebstoff aufnehmen kann, der zum Befestigen der inneren Teile an den Membranschichten verwendet wird.

3. Ein Filterelement nach Anspruch 2, wobei die besagte Klebstoff aufnehmende Nut neben dem Ort, an dem der Klebstoff zum Befestigen der inneren Teile an den Membranschichten verwendet wird, und unmittelbar neben der Filterfläche der Membran liegt.

4. Ein Filterelement nach Anspruch 1, wobei die besagten inneren Teile (12, 22 oder 52, 62) der besagten ersten und zweiten Rahmenprofile mit mindestens zwei Klebstoff aufnehmenden Nuten auf jeder Seite des Ortes, an dem der Klebstoff zum Befestigen der inneren Teile an den Membranschichten aufgetragen wird, versehen sind, wobei die besagten Nuten überschüssigen Klebstoff aufnehmen können.

5. Ein Filterelement nach irgendeinem der Ansprüche 1 bis 4, wobei die inneren Teile (12, 22 oder 52, 62) der besagten ersten und zweiten Rahmenprofile mit mindestens einer Klebstoffnut zum Auftragen von Klebstoff zum Befestigen der inneren Teile an den Membranschichten versehen sind.

6. Ein Filterelement nach Anspruch 1, wobei mindestens eines der besagten äußeren Teile (11, 21 oder 54, 64) des besagten ersten oder zweiten Rahmenprofils mit einer Klebstoff aufnehmenden Nut versehen ist, die besagten überschüssigen Klebstoff aufnehmen kann, welcher zum aneinander Befestigen der äußeren Teile verwendet wird.

7. Ein Filterelement nach Anspruch 1, wobei jedes der besagten äußeren Teile (11, 21 oder 54, 64) der besagten ersten und zweiten Rahmenprofile mit einer Klebstoff aufnehmenden Nut versehen ist, die besagten überschüssigen Klebstoff aufnehmen kann, welcher zum aneinander Befestigen der äußeren Teile verwendet wird.

8. Ein Filterelement nach Anspruch 6 oder 7, wobei die besagte Klebstoff aufnehmende Nut neben dem Ort, an dem der Klebstoff zum aneinander Befestigen der äußeren Teile aufgetragen wird, und unmittelbar neben den inneren Teilen liegt.

9. Ein Filterelement nach Anspruch 1, wobei mindestens eines der besagten äußeren Teile (11, 21 oder 54, 64) des besagten ersten oder zweiten Rahmenprofils mit mindestens zwei Klebstoff aufnehmenden Nuten auf jeder Seite des Ortes, an dem der Klebstoff zum aneinander Befestigen der äußeren Teile aufgetragen wird, versehen ist, wobei die besagte Nuten überschüssigen Klebstoff aufnehmen können.

10. Ein Filterelement nach Anspruch 1, wobei jedes der besagten äußeren Teile (11, 21 oder 54, 64) der besagten ersten und zweiten Rahmenprofile mit mindestens zwei Klebstoff aufnehmenden Nuten auf jeder Seite des Ortes, an dem der Klebstoff zum aneinander Befestigen der äußeren Teile aufgetragen wird, versehen ist, wobei die besagten Nuten überschüssigen Klebstoff aufnehmen können.

11. Ein Filterelement nach irgendeinem der vorhergehenden Ansprüche 1 bis 10, wobei die besagten äußeren Teile (11, 21 oder 54, 64) der besagten ersten und zweiten Rahmenprofile mit mindestens einer Klebstoffnut zum Auftragen von Klebstoff zum aneinander Befestigen der äußeren Teile versehen sind.

12. Ein Filterelement nach irgendeinem der vorhergehenden Ansprüche 1 bis 11, wobei ein zusätzlicher Permeatkonturkanal im besagten Längskanal entlang des Randes der Membran zum Sammeln und Transportieren von extrahiertem Permeat aus dem integrierten Permeatkanal zur besagten Auslassöffnung der Membran gebildet ist.

13. Ein Verfahren zum Herstellen eines Filterelementes, welches die folgenden Schritte umfasst:
- Bereitstellen einer Membran mit integriertem permeatkanal (4), wie in Anspruch 1 definiert,
- Bereitstellen eines ersten Rahmenprofils (1 oder 5) und eines zweiten Rahmenprofils (2 oder 6), wie in einem der Ansprüche 1 bis 11 definiert,
- Befestigen der Membran (4) auf dem ersten Rahmenprofil derart, dass die Membran in Kontakt mit dem inneren Teil (12 oder 52) des ersten Rahmenprofils ist,
- Auflegen des zweiten Rahmenprofils auf das erste Rahmenprofil, wobei die Membran anwesend ist auf eine solche Weise, dass die Membran in Kontakt mit dem inneren Teil (22 oder 62) des zweiten Rahmenprofils ist, und dass die äußeren Teile (11, 21 oder 54, 64) der ersten und zweiten Rahmenprofile in Kontakt mit einander sind,
- Auftragen eines Klebstoffs zwischen dem inneren Teil (12 oder 52) des ersten Rahmenprofils auf eine Fläche der Membran, zwischen dem inneren Teil (22 oder 62) des zweiten Rahmenprofils auf die andere Fläche der Membran und zwischen den äußeren Teilen (11, 21 oder 54, 64) der ersten und zweiten Rahmenprofile, und
- Befestigen der inneren Teile der ersten und zweiten Rahmenprofile an jeder Fläche der Membran und den äußeren Teile der ersten und zweiten Rahmenprofile aneinander.

14. Ein Filtermodul, das mehrere Filterelemente umfasst, wie in irgendeinem der vorherigen Ansprüche 1 bis 12 definiert.

15. Verfahren zum Verbessern des Drucks, der während des Filtrationsprozesses und/oder Rückspülprozesses ausgeübt wurde, und zum Reduzieren des Leckrisikos der Membran und/oder der Beschädigung der Membranflächen durch Abstützen einer Membran mit integriertem permeatkanal, wie in Anspruch 1 definiert, und zum Abdichten des integrierten Permeatkanals an der Kante der besagten Membran durch ein Rahmensystem, wie in Anspruch 1 definiert.

## Revendications

1. Elément de filtre comprenant:
(i) une membrane à canal de perméat intégré (4) qui a une structure flexible et comprend une couche de membrane supérieure et une couche de membrane inférieure et un matériau de substrat pour supporter lesdites couches de membrane, dans lequel ladite membrane est un tissu d'espacement en 3D ayant une surface de tissu supérieure et une surface de tissu inférieure, attachées ensemble et espacées par des fils monofilaments à une distance prédéterminée, dans lequel chacune parmi ladite surface de tissu supérieure et ladite surface de tissu inférieure est pourvue d'au moins une couche de membrane formant ladite couche de membrane supérieure et ladite couche de membrane inférieure et dans lequel un canal de perméat est intercalé entre lesdites couches de membrane supérieure et inférieure et est raccordé avec une ouverture de sortie pour décharger le perméat du canal de perméat intégré, et
(ii) un système de cadre supportant ladite membrane et réalisant l'étanchéité dudit canal de perméat intégré au niveau du bord de la membrane, **caractérisé en ce que** ledit système de cadre comprend un premier profil de cadre (1 ou 5) et un second profil de cadre (2 ou 6), chacun d'entre eux ayant une forme et des dimensions en mesure d'entourer la membrane,
dans lequel chacun desdits premier et second profils de cadre a des parties internes (12, 22 ou 52, 62) et des parties externes (11, 21 ou 54, 64),
dans lequel ladite membrane (4) est intercalée entre ledit premier profil de cadre (1 ou 5) et ledit second profil de cadre (2 ou 6), de sorte que les parties internes sont en contact avec la surface des couches de membrane supérieure et inférieure à la périphérie de la membrane, de sorte que les parties externes des deux profils de cadre sont en contact entre elles et de sorte que les parties internes forment un canal longitudinal (3 ou 7) équipant la membrane,
dans lequel le bord des parties internes en contact avec les surfaces des couches de membrane, le plus près d'une zone de filtration de la membrane, qui est la zone de la membrane qui est utilisée pour filtrer le liquide, a une forme incurvée, et
dans lequel un adhésif est utilisé pour fixer les parties internes aux couches de membrane et les parties externes entre elles.

2. Elément de filtre selon la revendication 1, dans lequel lesdites parties internes (12, 22 ou 52, 62) desdits premier et second profils de cadre sont pourvues d'une rainure recevant l'adhésif, pouvant recevoir l'excès dudit adhésif utilisé pour fixer les parties internes aux couches de membrane.

3. Elément de filtre selon la revendication 2, dans lequel ladite rainure recevant l'adhésif est présente à côté de l'endroit où l'adhésif est appliqué pour fixer les parties internes aux couches de membrane, le plus près de la zone de filtration de la membrane.

4. Elément de filtre selon la revendication 1, dans lequel lesdits parties internes (12, 22 ou 52, 62) desdits premier et second profils de cadre sont pourvues d'au moins deux rainures recevant l'adhésif de chaque côté de l'endroit où l'adhésif est appliqué pour fixer les parties internes aux couches de membrane, lesdites rainures pouvant recevoir l'excès d'adhésif.

5. Elément de filtre selon l'une quelconque des revendications 1 à 4, dans lequel lesdites parties internes (12, 22 ou 52, 62) desdits premier et second profils de cadre sont pourvues d'au moins une rainure d'adhésif pour appliquer l'adhésif afin de fixer les parties internes aux couches de membrane.

6. Elément de filtre selon la revendication 1, dans lequel au moins l'une desdites parties externes (11, 21 ou 54, 64) desdits premier ou second profils de cadre est pourvue d'une rainure recevant l'adhésif pouvant recevoir l'excès dudit adhésif utilisé pour fixer les parties externes entre elles.

7. Elément de filtre selon la revendication 1, dans lequel chacune desdites parties externes (11, 21 ou 54, 64) desdits premier et second profils de cadre est pourvue d'une rainure recevant l'adhésif pouvant recevoir l'excès dudit adhésif utilisé pour fixer les parties externes entre elles.

8. Elément de filtre selon la revendication 6 ou 7, dans lequel ladite rainure recevant l'adhésif est présente à côté de l'endroit où l'adhésif est appliqué pour fixer les parties externes entre elles, le plus prés des parties internes.

9. Elément de filtre selon la revendication 1, dans lequel au moins l'une desdites parties externes (11, 21 ou 54, 64) desdits premier ou second profils de cadre est pourvue d'au moins deux rainures recevant l'adhésif de chaque côté de l'endroit où l'adhésif est appliqué pour fixer les parties externes entre elles, lesdites rainures pouvant recevoir l'excès d'adhésif.

10. Elément de filtre selon la revendication 1, dans lequel chacune desdites parties externes (11, 21 ou 54, 64) desdits premier et second profils de cadre est pourvue d'au moins deux rainures recevant l'adhésif de chaque côté de l'endroit où l'adhésif est appliqué pour fixer les parties externes entre elles, lesdites rainures pouvant recevoir l'excès d'adhésif.

11. Elément de filtre selon l'une quelconque des revendications 1 à 10, dans lequel lesdites parties externes (11, 21 ou 54, 64) desdits premier et second profils de cadre sont pourvues d'au moins une rainure adhésive pour appliquer l'adhésif afin de fixer les parties externes entre elles.

12. Elément de filtre selon l'une quelconque des revendications 1 à 11, dans lequel un canal de contour de perméat supplémentaire est formé dans ledit canal longitudinal le long de la bordure de la membrane pour collecter et transporter le perméat extrait à partir du canal de perméat intégré jusqu'à ladite ouverture de sortie de la membrane.

13. Procédé pour fabriquer un élément de filtre comprenant les étapes consistant à :
prévoir une membrane à canal de perméat intégré (4) telle que définie à la revendication 1,
prévoir un premier profil de cadre (1 ou 5) et un second profil de cadre (2 ou 6) tels que définis dans l'une quelconque des revendications 1 à 11,
monter la membrane (4) sur le premier profil de cadre de sorte que la membrane soit en contact avec la partie interne (12 ou 52) du premier profil de cadre,
superposer le second profil de cadre sur le premier profil de cadre, dans lequel la membrane est présente de sorte que la membrane soit en contact avec la partie interne (22 ou 62) du second profil de cadre et en ce que les parties externes (11, 21 ou 54, 64) des premier et second profils de cadre soient en contact entre elles,
appliquer un adhésif entre la partie interne (12 ou 52) du premier profil de cadre sur une surface de la membrane, entre la partie interne (22 ou 62) du second profil de cadre sur l'autre surface de la membrane et entre les parties externes (11, 21 ou 54, 64) des premier et second profils de cadre, et
fixer les parties internes des premier et second profils de cadre sur chaque surface de la membrane et les parties externes des premier et second profils de cadre entre elles.

14. Module de filtre comprenant une pluralité d'éléments de filtre tels que définis dans l'une quelconque des revendications 1 à 12.

15. Procédé pour améliorer la pression appliquée pendant le procédé de filtration et/ou le procédé de lavage à contre courant et pour réduire le risque de fuites de la membrane et/ou d'endommagement des surfaces de la membrane en supportant une membrane à canal de perméat intégré telle que définie à la revendication 1 et réaliser l'étanchéité du canal de perméat intégré au niveau du bord de ladite membrane par un système de cadre tel que défini à la revendication 1.
